# EUROPEAN PATENT SPECIFICATION

(11) **EP 0 448 138 B1**
(45) Date of publication and mention of the grant of the patent: **13.12.1995**
(21) Application number: 91200259.9
(22) Date of filing: 08.02.1991
(51) Int. Cl.: C23C 18/16

(54) **Method for the electroless deposition of a metal layer on a flat article from a metallisation liquid**
Verfahren zum stromlosen Aufbringen einer Metallschicht auf einen flachen Gegenstand mit Hilfe einer Metallisierungsflüssigkeit.
Procédé de dépôt chimique d'un revêtement métallique sur un article plat à partir d'un liquide de métallisation

(30) Priority: 12.02.1990 NL 9000323
(43) Date of publication of application: 25.09.1991
(73) Proprietor: Philips Electronics N.V., 5621 BA Eindhoven (NL)
(72) Inventor: Legierse, Petrus Egidius Jacobus, NL-5656 AA Eindhoven (NL); de Boer, Paulus Gerhardus Johannes, NL-5656 AA Eindhoven (NL); Baten, Jacobus Henricus, NL-5656 AA Eindhoven (NL)
(74) Representative: Schrijnemaekers, Hubert Joannes Maria

(56) References cited:
- PATENT ABSTRACTS OF JAPAN, vol. 13, no. 249 (C-605)[3597], 9th June 1989; & JP-A-1 55 386
- PATENT ABSTRACTS OF JAPAN, vol. 13, no. 286 (C-613)[3634], 29th June 1989; and JP-A-179377
- IBM TECHNICAL DISCLOSURE BULLETIN, vol. 26, no. 7A, December 1983, pages 3431- 3434, New York, US; G.V. ARBACH et al.: "Plating rate monitor for electroless plating baths"

## Description

The invention relates to a method for the electroless deposition of a metal layer from a metallisation liquid on a flat side of an article to be metallised, for example, a flat disc, more in particular a master disc.

A method of manufacturing a metal matrix is described in US-A 4,931,147. A glass disc is provided with a photoresist layer in which an information track is provided. A nickel layer is provided on the master disc thus formed in an electroless nickel-plating bath. A further metal layer is provided on the nickel layer by electrodeposition, which metal layer is then separated from the master disc as a metal shell in which the information track of the photoresist layer is copied. The metal shell may then be used as a matrix for manufacturing optically readable discs. The method according to the invention is suitable for the electroless deposition of the nickel layer on the master disc, as well as the electroless deposition of the metal layer on other flat articles.

In the US patent document mentioned hereinbefore a master disc is disclosed which consists of a flat polished glass disc which on one side is provided with a layer of a usually positively acting photoresist. A suitable photoresist is, for example, a resist based on novolak and orthonaphthoquinone diazide. The photoresist layer is exposed in the form of a pattern, to, for example, modulated laser light as a result of which the exposed parts become soluble in a basic solution of, for example, NaOH in water. In order to improve the bonding between the glass disc and the photoresist, a bonding layer is provided on the glass disc before the photoresist layer is provided. A suitable bonding layer is, for example, titanium acetyl acetonate. In order to obtain a readily bonding nickel layer, the US patent document describes a number of measures. For example, before providing the nickel layer the top side of the master disc may be treated with a detergent and a solution of aminosilane. It is further suggested to provide the metallisation liquid with sodium benzene disulphonate to reduce stresses in the deposited metal layer. After the treatment with aminosilane the top side of the master disc may be treated with tannin. This has a favourable effect on the bonding of the nickel layer. It is stated that the various types of liquids may be sprayed, atomised, poured, etc. on the surface of the master disc and that dipping the master disc in the various solutions is also possible. Further data with respect to the electroless nickel-plating of master discs may be derived from the patent document already mentioned hereinbefore.

It is an object of the invention to provide a method which is excellently suitable for the electroless metallisation of master discs manufactured according to the method disclosed in the patent document mentioned hereinbefore but which might also be used advantageously for the metallisation of other articles.

It is known from GB-A 1,058,021 to silver-plate flat articles by spraying the article with liquids. A separate nozzle is used for each liquid, the various nozzles are united to form one assembly of movable spraying device which is controlled by means of suitable control means in such a manner that the nozzle to be used is always opposite to the article. The nozzles and also the article are in a closed metallisation device. The article, for example, a master disc, is provided on a rotating spindle in an inclined position. As a result of the inclined position the sprayed liquid constantly flows off the disc. The uniformity of the sprayed liquid film is promoted by the rotation. So these measures in common ensure a uniform film of constantly refreshed liquid to be created on the top side of the article.

The method known from the said GB patent document is not suitable for the electroless metallisation of articles by means of a stable metallisation liquid, for example, a stable nickel plating liquid. Nickel salts and reduction agent, for example, are present side by side in a stable nickel-plating liquid without they reacting with each other. Only the presence of a catalyst at the surface of the article to be metallised leads to the deposition of metal from the liquid. For the deposition of nickel, for example, palladium may serve as a catalyst. When using stable metallisation liquids the kinetics of the metallisation plays an important part. The process of depositing metal on a surface from a stable metallisation liquid, for example, a nickel-plating liquid comprising nickel sulphate complexed with pyrophosphate and ammonium, is kinetically and thermodynamically limited. This means that a minimum temperature is necessary and that movement of the metallisation liquid should be limited to such an extent that the deposition of metal is not prevented or inhibited by excessive kinetic supply of ions (hydrogen ions). The method of said GB patent document is excellently intended for use of a non-kinetically limited metallisation. Furthermore a disadvantage of the known method is the considerable consumption of process liquids. The liquids at the surface of the article are constantly refreshed, which in non-kinetically limited metallisation, leads to a rapid metallisation. However, it does have for its result that the liquids used are used effectively only partly.

It is a further object of the invention to provide a method with which a more economic use of process liquids is possible and which in addition is excellently suitable for use of stable metallisation liquids.

The method according to the invention is characterized in that the side to be metallised of the article is made hydrophillic, if necessary, the article is supported with the said side directed upwards, in an at least substantially horizontal position, the hydrophillic side is made catalytic for electroless deposition, a quantity of metallisation liquid is deposited on the hydrophillic side of the article which assumes the shape of a layer of a substantially constant thickness bounded by edges of the article and is kept for some time in a stationary condition, during which time metal is deposited on said side, and after depositing a metal layer of a sufficient thickness the remaining metallisation liquid is removed.

The invention surprisingly uses the fact that it is possible to give an article such a surface treatment that it is possible to provide a stable layer of liquid of some millimetres thickness on the surface. So in the method according to the invention an adjusted, comparatively small quantity of fresh metallisation liquid is always used which, after having been provided on the surface of the article, remains there in a stationary condition for some time. During said time metal deposits on the surface of the article. The invention thus combines uniquely the property of methods as described in the GB-A 1,058,021 mentioned hereinbefore in which an adjusted quantity of metallisation liquid is used with the fact that the metallisation liquid remains in a stationary situation in contact with the surface to be metallised, as is done, for example, also in a dipping bath. Compared with methods according to the said GB patent document less metallisation liquid is necessary and a stable metallisation liquid may be used and, compared with the use of a dipping bath, the advantage is present that always each article is metallised using fresh metallisation liquid with all the resulting advantages. For example, degradation of the store of the metallisation liquid does not occur. When stable metallisation liquids are used the store of metallisation liquid keeps its stable character since poisoning by catalyst is avoided. The metal can be used very flexibly since it does not constitute any objection to stop the metallisation of further articles after completing the metallisation of one article.

It is to be noted that JP-A 179,377 discloses a method and apparatus for electroless plating. A disc to be plated is set on a turntable, whereafter the turntable is lowered and a pipe opening is moved to a position above the disc by rotating a pipe arm. Successively a pretreating solution, a washing solution and a plating solution are dropped on a principal face of the disc during rotating of the disc. The said JP patent document neither discloses nor suggests to keep a liquid layer in a stationary condition while metallisation takes place.

In order to ensure in the method according to the invention that the metallisation liquid during the metallisation is in contact with the top side of the article, to be metallised it is necessary that a hydrophilic surface is present, that is to say a surface which comprises sufficient hydroxyl groups. It has been found that master discs immediately after the development of the photoresist layer in behalf of the metallisation can be further used without any separate treatment for making the photoresist layer hydrophilic being necessary. It has also been found, however, that after storing the developed master discs for some time the photoresist layer becomes water-repellent in such a manner that before the metallisation liquid can be provided on the surface, first a pretreatment is necessary for making the surface hydrophilic. The said US 4,931,147 describes a few suitable manners of making the surface hydrophilic.

Experience has demonstrated that according to an embodiment of the invention the thickness of the layer of metallisation liquid should be between 0.5 and 5 mm. When the thickness of the layer of metallisation liquid is smaller, problems occur in the formation of a metal layer of a sufficient thickness and of a sufficient homogeneity. A stationary layer of metallisation liquid having a thickness of more than 5 mm is difficult to obtain. It has been found that good results can be obtained when according to an embodiment of the invention the thickness of the layer of metallisation liquid is between 3 and 4 mm, for example 3.5 mm.

With a view to accelerating the metallisation process, an embodiment of the invention is of importance which is characterized in that before the metallisation liquid is deposited on the article, both the metallisation liquid and the article are heated above room temperature. Of great importance is the embodiment which is characterized in that a quantity of metallisation liquid is always heated which is just sufficient for metallising a single article. As a result of this it is prevented that unnecessary degradation of the store of metallisation liquid occurs. Still a further embodiment of the invention may be used advantageously which is characterized in that the article is heated to a higher temperature than the metallisation liquid and the combination of article and metallisation liquid after the deposition of the metallisation liquid assumes a temperature which has an optimum value for the metallisation process. For example, according to an embodiment of the invention which is of particular interest for nickel-plating articles by means of a stable nickel-plating liquid, the article is heated with water of 57°C and the metallisation liquid is hated to a temperature of 51°C.

The metallisation may take a number of minutes, for example, 5 minutes. It is of importance that during this period of time the layer of metallisation liquid remains present on the surface in a substantially stationary condition and that the temperature thereof does not change much. In order to be able to perform the metallisation in accurately controllable conditions, an embodiment of the invention is of importance which is characterized in that the method is carried out within a housing in which an air flow is maintained at a controlled temperature and a controlled speed and the temperature of the layer of metallisation liquid at the end of the metallisation is still above the temperature at which the deposition of metal from the metallisation liquid stops. Furthermore, the speed of the air flow should be so low that no interference of the stationary condition of the layer of metallisation liquid occurs. For reducing evaporation of metallisation liquid and the resulting cooling, according to a further embodiment of the invention water vapour may be added to the air flow.

Extremely advantageous is a method according to the invention which is characterized in that the article is supported so as to be rotatable and is slowly rotated during the metallisation. Slow rotation is to be understood to mean in this connection such a low speed of rotation that no essential influence is exerted on the stationary condition of the metallisation layer. However, as a result of the slow rotation a few important advantages are obtained. First of all, an equalisation of the temperature distribution in the layer of metallisation liquid occurs. Further it is prevented that as a result of the inevitable remaining small extent of inclined position of the article, and the resulting non-uniform thickness of the layer of metallisation liquid, a metal layer is formed on the surface of the article having an inhomogeneous thickness and composition. As a result of the rotating support of the article a series of further advantages are obtained. For example, a uniform coating of the top side of the article is possible, by depositing, in accordance with an embodiment of the invention, the metallisation liquid on the article from one or more outflow apertures with simultaneous slow rotation of the article. Slow rotation is to be understood to mean herein a rotation having such a low speed that the deposited metallisation liquid is not flung from the article. It has proved to be important to use during the metallisation an embodiment of the invention which is characterized in that the article is rotated uniformly at a speed which is a fraction of 1 Hz. The speed preferably is approximately 1/40 Hz.

Further advantages are possible in an embodiment of the invention which is characterized in that, after termination of the metallisation step, the metallisation liquid is removed from the surface of the article by increasing the speed of rotation and the resulting flinging away of the metallisation liquid under the influence of centrifugal forces. Further the characteristic feature may be used that in addition to the metallisation step, the method comprises a number of preceding steps in which liquid is provided on the top side of the article and is removed therefrom, for example, for providing layers of solutions of silane, tannin, salts of tin, silver and palladium and the intermediate rinsing with demineralised water and that during these further steps the article is also supported and rotated horizontally.

Since in the method according to the invention a substantially stationary layer of metallisation liquid is present on the top side of the article to be metallised, an embodiment may advantageously be used to increase the controllability of the method used, which is characterized in that the thickness of the deposited metal layer is measured by optical means by means of a beam of radiation in a wavelength for which the metallisation liquid is transparent. In principle, a measurement in reflection or in transmission may be used in known manner. However, measuring is always done through the layer of metallisation liquid. When measuring in transmission, measuring is also done through the article so that in that case also the article should be transparent for the beam of radiation used. When this embodiment of the invention is used, the metallisation may be discontinued at the exact instant at which the provided metal layer has the desired reflective or transmissive properties. In this manner a very constant product of the provided metal layers may be ensured and too long metallisation times are prevented.

The method according to the invention can be carried out with a device which preferably comprises a movable spraying member comprising at least one outflow aperture for each type of liquid to be used, the spraying member being movable between a spraying position above the article and a rest position on the side of the article. By using a separate spraying aperture for each liquid to be used, an undesired mixing of liquid is avoided. Undesired dripping of the liquids on the top side of the article to be metallised is prevented by moving the spraying arm aside in the rest condition.

The invention will now be described in greater detail with reference to the drawing which shows an embodiment of the invention by way of example and in which:
Fig. 1 is a diagrammatic cross-sectional view of a part of an article to be metallised consisting of a master disc,
Fig. 2 is a diagrammatic cross-sectional view of a part of a master disc comprising an electroless-deposited nickel layer,
Fig. 3 is a diagrammatic cross-sectional view of a part of a master disc comprising an electroless-deposited nickel layer and a electrolytically grown metal layer,
Fig. 4 is a diagrammatic cross-sectional view of a part of a father matrix,
Fig. 5 is a side elevation of a master disc having a liquid layer provided thereon and a turntable with motor to support the master disc.
Fig. 6 is a diagram of a nickel-plating device, and
Fig. 7 is a part of the diagram of Fig. 6 on an enlarged scale.

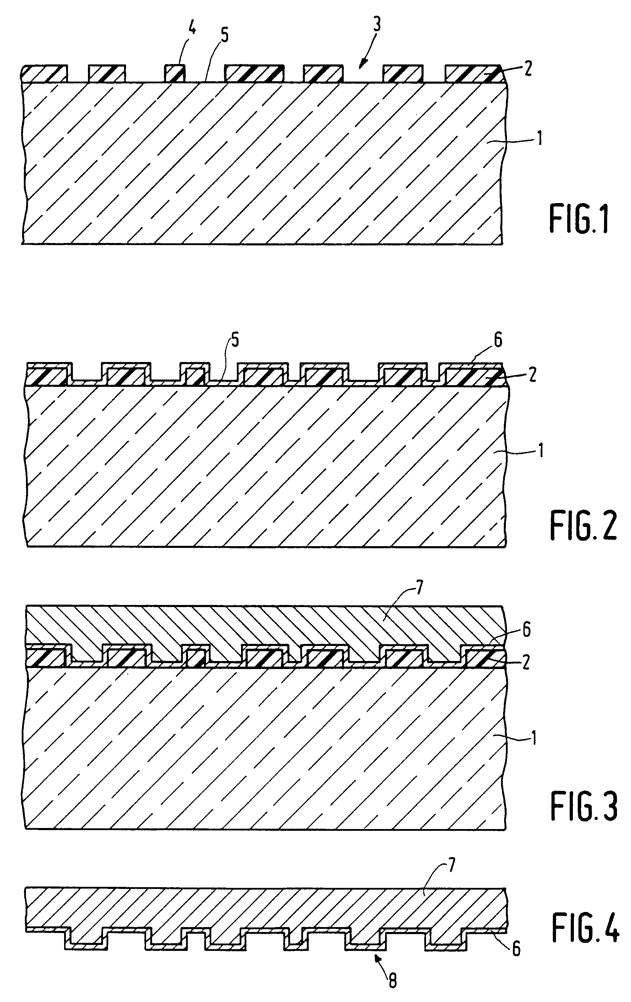

Reference numeral 1 in Fig. 1 denotes a 5 mm thick glass disc having a diameter of 240 mm. The glass disc is provided on one side with a bonding layer of titanium acetyl acetonate (not shown). The bonding layer is provided by means of a 0.5% solution of a titanium acetyl acetonate-isopropanol mixture in methyl isobutyl ketone, after which the solvent is evaporated. A photoresist layer 2 is then provided on the bonding layer and after drying has a layer thickness of, for example, 0.12 »m. The positive photoresist used is novolak having orthonaphthoquinone diazide as a photosensitive material. The resist layer is exposed to pulsated laser light (wavelength 458 nm) which is modulated in accordance with the information to be recorded. The resist layer thus exposed in a form of a pattern is developed with a solution of 10 g of NaOH and 50.5 g of Na₄P₂O₇.10H₂O per 4.5 litre of water. As a result of this the exposed parts of the photoresist layer are dissolved and a spiral-like information track 3 is formed which has a crennelated profile of information areas 4 situated at a higher level alternated by information areas 5 situated at a lower level. The longitudinal dimensions of the areas vary from approximately 0.3 to 3 »m in accordance with the stored information. The difference in height between the information areas is approximately 0.1 »m. The master disc is then dipped in a solution of 0.1 g of sodium lauryl sulphate per litre of water for 5 minutes. Rinsing with deionised water is then done for 1 minute. Process solutions of the following compositions are prepared for the treatments mentioned hereinafter:
Aminosilane solution: 4 ml of silane A1120 (product of Union Carbide Corp.) dissolved per 400 ml of deionised water.
Tannin solution: 1.2 g of tannin dissolved per 400 ml of deionised water.
Sn²⁺ solution: 5 »l of an RNA solution (product of London Laboratories Ltd.) dissolved per 400 ml of deionised water.

The master disc is provided in the following sequence on the photoresist side with the above mentioned process solutions by means of the method according to the invention, in which rinsing with deionised water is carried out for 1 minute after each process step.

| | |
|---|---|
| Aminosilane solution | 3 minutes |
| Tannin solution | 1 minute |
| Sn²⁺ solution | 1.5 minutes |
| Ag⁺ solution (0.5 ml of an MS-IL-solution dissolved in 400 ml deionised water) | 1 minute |
| Pd²⁺ solution (100 mg PdCl₂ dissolved in 3.5 ml conc. hydrochloric acid; made up to 1 litre with deionised water). | 1.25 minutes. |

The master disc pretreated in this manner is then electroless nickel-plated. For that purpose solutions of the following compositions are prepared:
- Stock solution A:: NiSO₄.6H₂O 50 g
Na₄P₂O₇.10H₂O 100 g
per litre of deionised water.

The solution is brought at a pH of 9.4 by means of concentrated ammonia.
- Stock solution B:: dimethylaminoborane 3 g
per litre of deionised water.

Equal volumes of stock solutions A and B are combined. The formed solution is brought at a pH of 9.2 by means of an aqueous H₂SO₄ solution (50% by weight of H₂SO₄). 1.110 g of sodium benzene disulphonate per 2 litre are then dissolved in the said solution. The nickel plating liquid is then ready.

An adjusted quantity of 400 ml of the nickel-plating liquid is heated at 51°C and brought on the photoresist side of the pretreated master disc. After approximately 30 minutes a 100 nm thick Ni layer 6 (see Fig. 2) has been deposited on the photoresist layer 2 and on the glass surface 3. The Ni layer comprises a few per cent by weight of B originating from the reduction agent dimethylaminoborane.

A nickel layer 7 (see Fig. 3) is then grown electrolytically in a thickness of 300 »m on Ni layer 6. The electroless Ni layer is connected as cathode in a bath having, for example, the following composition:

| | |
|---|---|
| Nickel sulphamate | 450 g/l |
| NiCl₂.2H₂O | 5 g/l |
| Boric acid | 45 g/l. |

The temperature of the bath of 45°C and the pH has a value of 4.0. The Ni layer is deposited at a current density of approximately 15 A/dm².

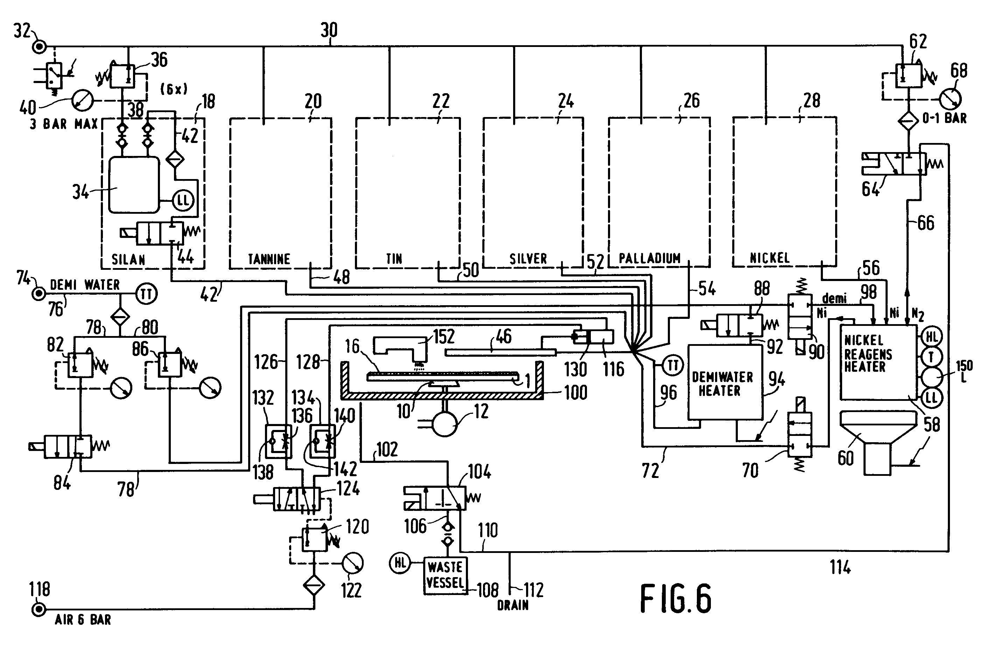

The metal shell consisting of the Ni layer 7 and the electroless Ni layer 6 bonded thereto is pulled loose from the photoresist layer 2 (see Fig. 4). The information track 8 present in the metal shell is a negative copy of information track 1 (Fig. 1). This negative copy is termed father matrix. Any remains of the photoresist layer remaining on the father matrix can be removed by means of the developing solution already mentioned, if the photoresist layer after developing the parts exposed in the form of a pattern is fully exposed with, for example, a 500 W super high pressure Hg lamp for 4 minutes. Usually a metal copy (mother matrix) is manufactured from the father matrix by passivating the surface of the nickel layer by treatment of the aqueous solution of K₂Cr₂O₇ and then growing an Ni layer on the side of the information track 8 by electroplating. After separating the latter Ni layer from Ni layer 6, 7 the mother matrix is obtained. Son matrices can be manufactured from said mother matrix in the same manner as mentioned hereinbefore by electroplating. By means of the son matrix, synthetic resin information carriers are manufactured by using, for example, an injection moulding process. Both the father matrix, the mother matrix, the son matrix and the synthetic resin information carriers have excellent surface qualities.

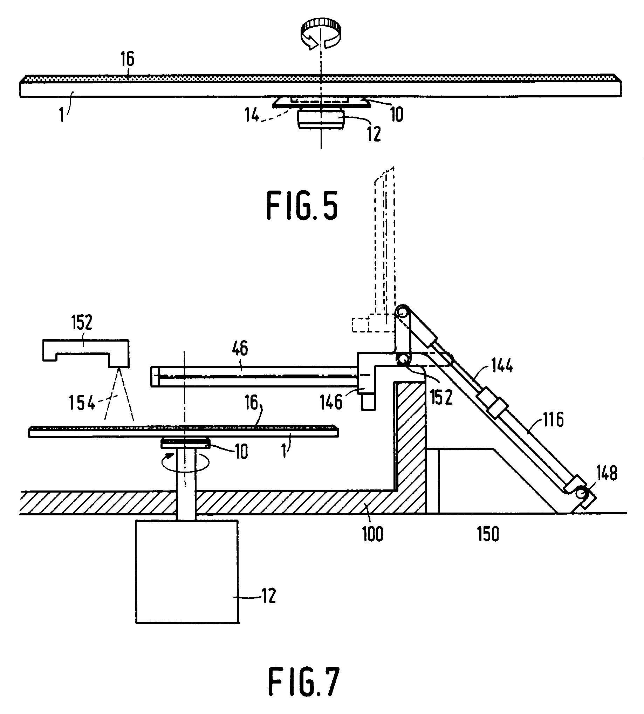

As shown in Fig. 5, for nickel-plating, the glass substrate 1 of the master disc having thereon the resist layer 2 comprising an information track 3 (not shown in the drawing) is supported in a horizontal position with the top side directed upwards. The horizontal support is obtained by means of a turntable 10 which is driven by an electric motor 12. The glass substrate 1 has no central aperture. On the lower side a ferromagnetic centring head 14 is adhered which is held by the turntable 10 by means of permanent magnetic clamping means in a manner which is not shown but which is known per se. A quantity of nickel-plating liquid is deposited on the top side of the glass substrate and assumes the shape of a layer 16 of a substantially constant thickness bounded by the outer edge of the substrate. Said layer of approximately 3.5 mm thickness remains on the substrate in a stationary condition until a nickel layer 6, see Fig. 2, of sufficient thickness has been deposited. The layer of nickel-plating liquid 16 is then removed entirely from the substrate 1. A stable layer of liquid can also be obtained when a glass plate is used which does have a central aperture.

The turntable 10 and the electric motor 12 form part of a nickel-plating device which is shown diagrammatically in Fig. 6. The device comprises a number of storage vessels 18 to 28, which comprise successively process liquids for treating the surface of the master disc with silane, tannin, tin, silver, palladium and then nickel. A compressed gas pipe 30 communicates with a compressed gas source not shown via a connection point 32. An inert gas, for example, nitrogen is preferably used. The storage container 18 comprises storage vessel 34 in which the silane-containing process liquid is present. Via a reducing valve 36 compressed gas is supplied to the contents of the storage vessel 34 via the pipe 38 at a pressure of approximate 3 bar to be read on a nanometer 40. The compressed process liquid is transported to the spray arm 46 via a duct 42 and an electromagnetic valve 44 incorporated therein. The storage containers 20 to 28 have similar provisions but these are not shown to avoid complexity of the drawing. Via the ducts 48 to 54 the storage containers 20 to 26 communicate with the spray arm 46. The outlet duct 56 of the storage container 28 of the nickel-plating liquid leads to an intermediate vessel 58 in which a certain quantity of nickel-plating liquid can be heated. Heating is done by means of an infrared radiator 60. The liquid heater 58 is under a pressure of approximately 1 bar via a reducing valve 62 and an electromagnetic valve 64 via a duct 66 to be read on a manometer 68. Heated nickel-plating liquid is supplied to the spray arm 46 via an electromagnetic valve 70 in a pipe 72. For rinsing the master disc demineralised water from a source not shown is supplied to the device via a connection 74. The connection 74 communicates with a dividing pipe 76 which splits into two pipes 78 and 80. Demineralised water is supplied to the spray arm 46 under pressure after passing a pressure reducing valve 82 and an electromagnetically operated valve 84. The pipe 80 supplies demineralised water under pressure, via a pressure control valve 86, to two electromagnetic valves 88 and 90. The valve 88 communicates, via a pipe 92, with a water heating reservoir 94 which can supply heated demineralised water to the spray arm 46 via an outlet 96. The electromagnetic valve 90 supplies demineralised water to the liquid heater 58 via a duct 98. As a result of this the liquid heater 58 can be rinsed with demineralised water at the end of the nickel-plating phase. The rinsing water is supplied to the spray arm 46 via the valve 70 and the duct 72 so that the water which is used for rinsing the liquid heater 58 is also used for rinsing the surface of the master disc 1. During the rinsing the ducts between the liquid heater and the spray arm 46 are also rinsed.

During the process the master disc is accommodated in a container 100 which serves to collect processed used liquids. Draining used process liquids take place via a drain 102 which can be communicated with a waste reservoir 108 by means of an electromagnetically operated valve 104 via a duct 106 or can be communicated directly with a drain 112 via a duct 110. The waste reservoir 108 serves in particular to collect used process liquids which might be detrimental to the environment and/or of used liquids which can be processed in a cost-effective manner for recovering raw materials. For rinsing the liquid heater 58 with demineralised water, the duct 66 may also be used which may be communicated with the drain 112 via the electromagnetic valve 64 and via a drain 114.

The spray arm 46 can be moved between the spray positions above the master disc 1 shown and a rest position not shown on the side of the article by means of a pneumatic motor 116. In the rest position not shown the spray arm is in a vertical position, see also Fig. 7. Compressed air from a pressure reservoir not shown is used for driving the pneumatic motor via an air connection 118. The pressure is reduced to an operating pressure which is suitable for the motor 116 by means of a reducing valve 120 and can be read on a manometer 122. By means of an electromagnetically operated valve 124 the air of reduced pressure may be supplied via two ducts 126 and 128 optionally to one of the two sides of a piston 130 of the air motor 116 in order to move the piston in one or in the other direction. For restricting the rate of movement of the piston 130 control units 132 and 134 are incorporated in the ducts 126 and 128. The control unit 132 comprises an adjustable pneumatic resistor 136 and a pneumatic or non-return valve 138 arranged parallel thereto. The unit 134 comprises identical elements 140 and 142. Air supply to the pneumatic motor 116 may be done without hindrance via the pneumatic diode while the drain of air takes place via a pneumatic resistor as a result of which a braking of the movement of the piston occurs. As shown in greater detail in Fig. 8 the pneumatic motor 116 comprises a piston rod 144 which is connected at one free end to an approximately Z-shaped support 146 of the spray arm 46. On the oppositely located side the pneumatic motor is connected to a support 150 of the device so as to be swingable via a hinge 148. The Z-shaped support is connected to the device so as to be swingable by means of a hinge 152. By a translating movement of the piston rod 144 the spray arm 46 can thus be moved between the spray position above the master disc 1 shown and the broken line rest position on the side of the master disc. In the rest position any drops originating from the spray arm may be collected in the container 100.

The thickness of a deposited nickel layer on the master disc 1 is measured by means of optical means shown diagrammatically in the drawing, namely an optical reflection meter 152. This measures the extent of reflection of the deposited metal layer by means of a beam of radiation 154 having a wavelength for which the metallisation liquid 16 is transparent. Since the construction of the reflection meter is not of importance for the essence of the present invention the operation thereof will not be further described. Such reflection meters, however, are known in the art. They comprise a radiation-sensitive cell which provides a voltage which is proportional to the intensity of the radiation incident on the cell. According as the thickness of the nickel layer increases, the reflecting power of the deposited nickel layer also increases and hence also the extent to which the radiation of the radiation beam 154 is reflected. So the intensity of the radiation incident on the radiation-sensitive cell also increases with the thickness of the nickel layer. At the instant the intensity of the reflected radiation has reached a previously adjusted value, the nickel-plating phase is terminated by an electronic control device not shown.

The receiving container 100 as well as a few other parts of the device shown in Fig. 6, for example, the liquid heater 58 and the infrared radiator 60, are present in a housing not shown in the drawing in which an air flow is maintained at a controlled temperature and a controlled speed by means known for air treating devices.

## Claims

1. A method for the electroless deposition of a metal layer from a metallisation liquid on a flat side of an article to be metallised, for example, a flat disc, more in particular a master disc, characterized in that
- the side to be metallised of the article is made hydrophillic, if necessary,
- the article is supported with the said side directed upwards, in an at least substantially horizontal position,
- the hydrophillic side is made catalytic for electroless deposition,
- a quantity of metallisation liquid is deposited on the hydrophillic side of the article which assumes the shape of a layer of a substantially constant thickness bounded by edges of the article and is kept for some time in a stationary condition, during which time metal is deposited on said side, and
- after depositing a metal layer of a sufficient thickness the remaining metallisation liquid is removed.

2. A method as claimed in Claim 1, characterized in that the thickness of the layer of metallisation liquid is chosen between 0.5 and 5 mm.

3. A method as claimed in Claim 2, characterized in that the thickness of the layer of metallisation liquid is chosen between 3 and 4 mm.

4. A method as claimed in Claim 1, characterized in that before depositing the metallisation liquid on the article, both the metallisation liquid and the article are heated above room temperature.

5. A method as claimed in Claim 4, characterized in that a quantity of metallisation liquid which is just sufficient for metallising a single article is heated.

6. A method as claimed in Claim 4, characterized in that the article is heated to a higher temperature than the metallisation liquid in order that the combination of article and metallisation liquid after depositing the metallisation liquid assumes a temperature which has an optimum value for the metallisation process.

7. A method as claimed in Claim 6, characterized in that the article is heated to 57°C and the metallisation liquid is heated to a temperature of 51°C.

8. A method as claimed in Claim 4, characterized in that the method is carried out within a housing in which an air flow is maintained at a controlled temperature and a controlled speed and the temperature of the layer of metallisation liquid at the end of the metallisation step is still above the temperature at which the deposition of metal from the metallisation liquid stops.

9. A method as claimed in Claim 8, characterized in that water vapour is added to the air flow to reduce evaporation of metallisation liquid.

10. A method as claimed in Claim 1, characterized in that the article is supported so as to be rotatable and is rotated during metallisation at such a speed rotation that no essential influence is exerted on the stationary condition of the metallisation layer.

11. A method as claimed in Claim 10, characterized in that the metallisation liquid is deposited on the article from one or more outflow apertures with simultaneous slow rotation of the article.

12. A method as claimed in Claim 10, characterized in that during the deposition of the metal the article is rotated uniformly at a speed which is a fraction of 1 Hz.

13. A method as claimed in Claim 12, characterized in that the speed is approximately 1/40 Hz.

14. A method as claimed in Claim 10, 11, 12 or 13, characterized in that after completing the metallisation step, the remaining metallisation liquid is removed from the surface of the article by increasing the speed of rotation to fling away said metallisation liquid under the influence of centrifugal forces.

15. A method as claimed in any of the preceding Claims, characterized in that, in addition to the metallisation step, the method comprises a number of preceding steps in which liquid is provided on the side to be metallised and removed therefrom, in particular for providing solutions of silane, tannin, salts of tin, silver, palladium and an intermediate rinsing with demineralised water, and that during these further steps the article is supported and rotated horizontally.

16. A method as claimed in Claim 1, characterized in that the thickness of the deposited metal layer is measured by optical means by means of a beam of radiation having a wavelength for which the metallisation liquid is transparent.

## Patentansprüche

1. Verfahren zum stromlosen Aufbringen einer Metallschicht aus einer Metallisierungsflüssigkeit auf einer flachen Seite eines zu metallisierenden Gegenstandes, beispielsweise einer flachen Scheibe, insbesondere einer Master-Scheibe, dadurch gekennzeichnet, daß
- die zu metallisierende Seite des Gegenstandes gegebenenfalls hydrophil gemacht wird,
- der Gegenstand derart unterstützt wird, daß die genannte Seite aufwärts gerichtet ist in einer wenigstens im wesentlichen horizontalen Lage,
- die hydrophile Seite für stromlose Metallisierung katalytisch gemacht wird,
- eine Menge der Metallisierungsflüssigkeit auf die hydrophile Seite des Gegenstandes aufgebracht wird, welche die Form einer Schicht einer im wesentlichen konstanten Dicke annimmt, die an den Rändern des Gegenstandes begrenzt wird und einige Zeit in einer stabilen Lage gehalten wird, während der das Metall auf der genannten Seite sich niederschlägt und
- nach Ablagerung einer Metallschicht einer ausreichenden Dicke die restliche Metallisierungsflüssigkeit entfernt wird.

2. Verfahren nach Anspruch 1, dadurch gekennzeichnet, daß die Dicke des Metallisierungsflüssigkeitsfilms zwischen 0,5 und 5 mm gewählt wird.

3. Verfahren nach Anspruch 2, dadurch gekennzeichnet, daß die Dicke des Metallisierungsflüssigkeitsfilms zwischen 3 und 4 mm liegt.

4. Verfahren nach Anspruch 1, dadurch gekennzeichnet, daß bevor die Metallisierungsflüssigkeit auf den Gegenstand aufgetragen wird, die Flüssigkeit sowie der Gegenstand bis über Raumtemperatur erwärmt werden.

5. Verfahren nach Anspruch 4, dadurch gekennzeichnet, daß jeweils eine Menge Metallisierungsflüssigkeit erwärmt wird die gerade ausreicht zum Metallisieren eines einzigen Gegenstandes.

6. Verfahren nach Anspruch 4, dadurch gekennzeichnet, daß der Gegenstand auf eine höhere Temperatur erwärmt wird als die Metallisierungsflüssigkeit und die Kombination aus Gegenstand und Metallisierungsflüssigkeit nach der Auftragung der Metallisierungsflüssigkeit eine Temperatur annimmt, die einen optimalen Wert für das Metallisierungsverfahren hat.

7. Verfahren nach Anspruch 6, dadurch gekennzeichnet, daß der Gegenstand auf 57°C erwärmt wird und daß die Metallisierungsflüssigkeit auf eine Temperatur von 51°C erwärmt wird.

8. Verfahren nach Anspruch 4, dadurch gekennzeichnet, daß das Verfahren innerhalb eines Gehäuses durchgeführt wird, in dem ein Luftstrom eingehalten wird mit einer geregelten Temperatur und einer geregelten Geschwindigkeit und wobei die Temperatur des Metallisierungsflüssigkeitsfilms am Ende der Metallisierung sich noch über der Temperatur befindet, bei der Niederschlag von Metall aus der Metallisierungsflüssigkeit endet.

9. Verfahren nach Anspruch 8, dadurch gekennzeichnet, daß zur Verringerung von Verdampfung von Metallisierungsflüssigkeit dem Luftstrom Wasserdampf hinzugefügt wird.

10. Verfahren nach Anspruch 1, dadurch gekennzeichnet, daß der Gegenstand drehbar unterstützt und in während der Metallisierung mit einer solchen Geschwindigkeit gedreht wird, daß der stationäre Zustand des Metallisierungsfilms nicht beeinträchtigt wird.

11. Verfahren nach Anspruch 10, dadurch gekennzeichnet, daß die Metallisierungsflüssigkeit aus mehreren Düsen bei gleichzeitiger langsamer Drehung des Gegenstandes aufgetragen wird.

12. Verfahren nach Anspruch 10, dadurch gekennzeichnet, daß beim Auftragen des Metalls der Gegenstand in einer einheitlicher Bewegung mit einer Geschwindigkeit gedreht wird, die ein Bruchteil von 1 Hz ist.

13. Verfahren nach Anspruch 12, dadurch gekennzeichnet, daß die Geschwindigkeit etwa 1/40 Hz beträgt.

14. Verfahren nach Anspruch 10, 11, 12 oder 13, dadurch gekennzeichnet, daß nach Vervollständigung des Metallisierungsschrittes die restliche Metallisierungsflüssigkeit dadurch von der Oberfläche des Gegenstandes entfernt wird, daß die Drehgeschwindigkeit gesteigert wird, wodurch die Metallaisierungsflüssigkeit unter dem Einfluß von Zentrofugalkräften weggeschleudert wird.

15. Verfahren nach einem der vorstehenden Ansprüche, dadurch gekennzeichnet, daß das Verfahren außer dem Metallisierungsschritt noch einige vorhergehende Schritte umfaßt, bei denen Flüssigkeit auf der zu metallisierenden Seite aufgetragen und von derselben entfernt wird, insbesondere zum Anbringen von Lösungen von Silan, Tannin, Zinn-, Silber-, Palladiumsalzen, sowie einen zwischenzeitlichen Spülschritt mit entmineralisiertem Wasser und daß auch während dieser weiteren Schritte der Gegenstand horizontal unterstützt und gedreht wird.

16. Verfahren nach Anspruch 1, dadurch gekennzeichnet, daß die Dicke der aufgetragenen Metallschicht durch optische Mittel mit Hilfe eines Strahlungsbündels mit einer Wellenlänge, für welche die Metallisierungsflüssigkeit transparent ist.

## Revendications

1. Procédé pour le dépôt sans électrodes d'une couche métallique à partir d'un liquide de métallisation sur une face plane d'un article à métalliser, par exemple un disque plan, plus en particulier un disque maître, caractérisé en ce que
- la face à métalliser de l'article est rendue au besoin hydrophile,
- l'article est supporté avec la petite face dirigée vers le haut dans une position au moins pratiquement horizontale,
- la face hydrophile est rendue catalytique pour le dépôt sans électrodes,
- une quantité de liquide de métallisation est déposée sur la face hydrophile de l'article qui épouse la forme d'une couche d'une épaisseur pratiquement constante délimitée par les bords de l'article et est maintenue pendant quelque temps dans une condition stationnaire, temps pendant lequel du métal est déposé sur ladite face et
- après dépôt d'une couche métallique d'une épaisseur suffisante, le liquide de métallisation subsistant est enlevé.

2. Procédé selon la revendication 1, caractérisé en ce que l'épaisseur de la couche de liquide de métallisation est choisie entre 0,5 et 5 mm.

3. Procédé selon la revendication 2, caractérisé en ce que l'épaisseur de la couche de liquide de métallisation est choisie entre 3 et 4 mm.

4. Procédé selon la revendication 1, caractérisé en ce qu'avant le dépôt du liquide de métallisation sur l'article, tant le liquide de métallisation que l'article sont chauffés jusqu'à une température supérieure à la température ambiante normale.

5. Procédé selon la revendication 4, caractérisé par le chauffage d'une quantité de liquide de métallisation qui suffit tout juste pour la métallisation d'un seul article.

6. Procédé selon la revendication 4, caractérisé en ce que l'article est chauffé à une température plus élevée que le liquide de métallisation afin qu'après dépôt du liquide de métallisation la combinaison de l'article et du liquide de métallisation acquière une température présentant une valeur optimale pour le processus de métallisation.

7. Procédé selon la revendication 6, caractérisé en ce que l'article est chauffé à 57°C et le liquide de métallisation est chauffé à une température de 51°C.

8. Procédé selon la revendication 4, caractérisé en ce que le procédé est effectué dans un boîtier dans lequel un flux d'air est maintenu à une température et une vitesse commandées et la température de la couche de liquide de métallisation après l'étape de métallisation est toujours supérieure à la température à laquelle s'arrête le dépôt de métal à partir du liquide de métallisation.

9. Procédé selon la revendication 8, caractérisé en ce que de la vapeur d'eau est ajoutée au flux d'air pour réduire l'évaporation du liquide de métallisation.

10. Procédé selon la revendication 1, caractérisé en ce que l'article est supporté de façon à pouvoir tourner et est tourné pendant la métallisation à une vitesse de rotation de façon qu'une influence notable ne soit pas exercée sur la condition stationnaire de la couche de métallisation.

11. Procédé selon la revendication 10, caractérisé en ce que le liquide de métallisation est déposé sur l'article à partir d'un ou de plusieurs orifices d'écoulement lors d'une rotation lente simultanée de l'article.

12. Procédé selon la revendication 10, caractérisé en ce que lors du dépôt du métal, l'article est porté à une rotation uniforme à une vitesse qui est une fraction de 1 Hz.

13. Procédé selon la revendication 10, caractérisé en ce que la vitesse et d'environ 1/40 Hz.

14. Procédé selon la revendication 10, 11, 12 ou 13, caractérisé en ce qu'après l'étape de métallisation, le liquide de métallisation subsistant est enlevé de la surface de l'article par augmentation de la vitesse de rotation pour enlever par lancement dudit liquide de métallisation sous l'influence de forces centrifuges.

15. Procédé selon l'une des revendications précédentes, caractérisé en ce qu'en plus de l'étape de métallisation, le procédé comprend plusieurs étapes précédentes dans lesquelles le liquide est appliqué sur la face à métalliser et en enlevé, en particulier pour l'application de solutions de silane, tanin, sel d'étain, argent, palladium et un rinçage intermédiaire avec de l'eau déminéralisée et que lors de ces autres étapes, l'article est supporté et tourné de façon horizontale.

16. Procédé selon la revendication 1, caractérisé en ce que l'épaisseur de la couche métallique déposée est mesurée par des moyens optiques à l'aide d'un faisceau de rayonnement présentant une longueur d'onde pour laquelle le liquide de métallisation est transparent.
